# FASCICULE DE BREVET EUROPEEN

(11) **EP 0 654 215 B1**
(45) Date de publication et mention de la délivrance du brevet: **12.08.1998**
(21) Numéro de dépôt: 94402625.1
(22) Date de dépôt: 18.11.1994
(51) Int. Cl.: A01K 1/015

(54) **Litière biodégradable pour animaux, contenant des anas de lin ou de chanvre ou leurs mélanges**
Biologische abbaubare Tierstreu mit Leinen oder Flachs oder ihren Mischungen
Biodegradable animal litter with flax or hemp or their mixtures

(30) Priorité: 19.11.1993 FR 9313898
(43) Date de publication de la demande: 24.05.1995
(73) Titulaire: Lamerant, Philippe, F-27110 Le Neubourg (FR)
(72) Inventeur: Lamerant, Philippe, F-27110 Le Neubourg (FR)
(74) Mandataire: Stalla-Bourdillon, Bernard

(56) Documents cités:
- EP-A- 0 022 010
- DE-U- 9 215 339
- FR-A- 1 525 262
- FR-A- 2 542 217
- FR-A- 2 576 524
- US-A- 5 154 594

## Description

La présente invention a pour objet une litière biodégradable pour animaux et plus particulièrement pour chevaux, contenant des anas de lin ou de chanvre ou leurs mélanges imprégnés par une composition huileuse d'hygiène et fixatrice.

Des résidus de nature ligno-cellulosique sont utilisés depuis de nombreuses années pour absorber des déchets liquides.

Parmi ceux-ci, on peut citer la sciure de bois déshydratée dont l'usage a été très répandu en raison de son faible coût. Toutefois, celle-ci s'est avérée insuffisamment absorbante dans la mesure où son pouvoir absorbant en eau est de l'ordre de 200 % en poids par rapport au poids d'absorbant et provoque en outre, en raison de sa faible granulométrie, la formation d'une grande quantité de poussière.

On peut également citer l'utilisation, décrite dans la demande de brevet GB 2.136.263, de granulés réalisés à partir de sciures ou de copeaux de bois en association avec un liant lipidique pour former une litière pour animaux. Ce mode de présentation réalisable grâce à l'addition d'un liant a pour rôle d'éviter que la litière ne colle aux pattes des animaux. Cependant lorsque celle-ci est souillée, les granulés se délitent, ce qui conduit par conséquent également à la formation d'une grande quantité de poussière.

Il a par ailleurs été proposé dans la demande de brevet EP 022.010 d'utiliser des sous-produits de cannabinacées et en particulier des anas de chanvre bruts pour réaliser des litières pour animaux. Ces anas sont des résidus des tiges de chanvre obtenus après extraction des fibres textiles du chanvre. En raison de la présence d'une grande quantité de poussière, les litières obtenues n'ont pas été jugées très satisfaisantes.

Il est en outre bien connu que les anas de lin, c'est-à-dire les résidus des tiges de lin obtenus après extraction des fibres textiles de lin, présentent un fort pouvoir absorbant. Ainsi, il a été proposé dans la demande de brevet FR 85.01205 (2.576.524), des litières à base d'anas de lin présentées sous forme de miettes obtenues à partir de granulés. Toutefois, la préparation de celles-ci nécessite, pour une bonne adhésion des fibres de lin, l'emploi de soude caustique comme agent liant. Les litières ainsi obtenues sont donc difficilement éliminables par un processus naturel et leur pouvoir absorbant n'est en outre que de l'ordre de 200 % en poids d'eau par rapport au poids de l'absorbant.

Pour des raisons écologiques, la tendance actuelle consiste à limiter la quantité produite en déchets non biodégradables. Il était donc particulièrement souhaitable de pouvoir disposer d'un produit présentant un très bon pouvoir absorbant tout en étant également biodégradable.

On a maintenant constaté de façon surprenante et inattendue qu'on obtenait une excellente litière biodégradable pour animaux et plus particulièrement pour chevaux, à partir d'anas de lin ou de chanvre imprégnés d'une composition huileuse d'hygiène et fixatrice en une proportion déterminée.

L'utilisation de ces anas imprégnés par cette composition particulière confère à la litière obtenue, de très nombreux avantages par rapport aux litières actuellement présentes sur le marché :
1°) elle possède un pouvoir absorbant accru, celui-ci étant supérieur à 300 % en poids,
2°) elle ne libère pas de poussière dans son environnement, la poussière résiduelle initiale étant fixée sur les anas, et aucune poussière n'étant formée par la litière souillée,
3°) elle possède un effet bénéfique sur le système respiratoire de l'animal par la présence d'un agent antiseptique,
4°) elle est aisément manipulable, avant et après utilisation, et
5°) elle est facilement éliminable en raison de sa biodégradabilité, et peut être éventuellement utilisée après usage comme amendement compostable.

La présente invention a donc pour objet une litière biodégradable pour animaux constituée d'anas de lin ou de chanvre ou leurs mélanges imprégnés par 2 à 6 % en poids d'une composition huileuse d'hygiène et fixatrice, celle-ci contenant de l'huile de colza, de tournesol ou leurs mélanges et au moins un agent antiseptique.

Le terme d'anas désigne, comme ceci a été précisé précédemment, les résidus obtenus à partir du lin ou du chanvre après extraction de leurs fibres textiles.

Selon un mode de réalisation particulier de la litière selon l'invention, on utilise de préférence des anas de lin.

En effet, les anas de lin permettent de conférer à la litière selon l'invention, un pouvoir absorbant en eau supérieur à 400 % en poids.

Le procédé conventionnel de transformation du lin ou du chanvre consiste après récolte, à les répartir en andains où ils subissent un début de pourriture appelé rouissage, permettant de faciliter leur teillage ultérieur, c'est-à-dire le traitement mécanique nécessaire à la séparation d'une part des fibres courtes et longues appelées respectivement étoupes et filasses utilisées dans l'industrie textile, et d'autre part de la partie ligneuse se présentant sous forme de pailles ou encore appelées anas.

A partir des anas obtenus, on sélectionne de préférence, pour réaliser la litière selon l'invention, ceux ayant une longueur moyenne comprise entre 2 et 30 mm.

Les anas ainsi obtenus sont toutefois accompagnés notamment de poussière très difficilement éliminable qui les rend inutilisables tels quels en tant que litière animale. Selon l'invention, on supprime la libération de poussière par son adsorption par fixation sur les anas à l'aide de la composition huileuse.

Une proportion plus faible en composition huileuse conduirait à une fixation insuffisante de la poussière tandis qu'une proportion plus élevée, aurait pour effet de réduire le pouvoir absorbant de la litière.

Selon un mode de réalisation particulièrement préféré de la litière selon l'invention, les anas sont imprégnés par une quantité inférieure ou égale à 4 % en poids de la composition huileuse telle que définie précédemment.

La composition huileuse est essentiellement constituée d'environ 80 à 99,9 % en poids d'huile de colza, d'huile de tournesol ou de leurs mélanges.

Ces deux huiles végétales telles que définies précédemment n'affectent pas la structure ligno-cellulosique des anas tout en étant biodégradables. En outre, elles présentent par rapport à d'autres huiles végétales d'une part une bonne aptitude à se répartir sur les anas et d'autre part une excellente capacité à fixer la poussière sur ceux-ci tout en étant d'un faible coût.

L'agent antiseptique est généralement présent en une proportion comprise entre 0,1 % et 20 %, et de préférence en une proportion comprise entre 2 et 15 % en poids par rapport au poids total de la composition huileuse.

Parmi les agents antiseptiques pouvant être utilisés selon l'invention, on peut citer notamment les dérivés d'alkyl phénols et les dérivés de terpènes cycliques monooxygénés, et leurs mélanges.

Parmi les dérivés d'alkyl phénols pouvant être utilisés selon l'invention, on peut citer notamment le thymol d'origine synthétique ou naturelle et en particulier les extraits naturels à base de thymol.

Parmi les dérivés de terpènes cycliques monooxygénés pouvant être utilisés selon l'invention, on peut citer notamment le menthol et l'eucalyptol d'origine synthétique ou naturelle et en particulier les extraits naturels à base de ces composés.

La composition huileuse selon l'invention peut comprendre en outre au moins un additif choisi parmi notamment le camphre, l'huile de noix de muscade et l'huile de feuille de chêne.

La présence de camphre, dans la composition huileuse selon l'invention stimule les appareils vasculaires et nerveux et favorise donc la respiration de l'animal.

L'huile de noix de muscade a pour effet notamment de renforcer l'action des principes actifs contenus dans la composition huileuse.

L'huile de feuille de chêne est utilisée pour fixer les principes actifs volatils de la composition et permet ainsi de prolonger son effet.

La composition huileuse telle que définie ci-dessus possède en plus de sa capacité à fixer la poussière et de ses propriétés antiseptiques, une odeur agréable masquant l'odeur d'ammoniaque provenant de l'urine des animaux.

On peut ajouter en outre à la litière selon l'invention un mélange de bactéries en vue d'inhiber de façon compétitive le développement de souches indésirables, et retarder le début de la fermentation de la litière.

Ceci a pour effet de prolonger, de façon durable l'utilisation de la litière. Ainsi la stalle d'un cheval peut être maintenue propre pendant trois à quatre semaines en ne réalisant que des apports partiels de la litière selon l'invention.

En outre, cela permet également d'éviter l'échauffement de la sole de l'animal, c'est-à-dire de la partie cornée située à la base de son sabot, dû à la forte augmentation de la température accompagnant la fermentation.

Parmi les souches bactériennes utilisables pour ensemencer la litière selon l'invention, on peut citer notamment, celles commercialisées sous les dénominations de "Lisodor" par la Société Courtagro, d'"Equifloc" par la Société Techniques et Biochimie appliquées ou de "Biosmose LC" par la Société Bionergies.

On peut également ajouter à la litière selon l'invention, un agent antifongique tel qu'un ammonium quaternaire et en particulier du chlorure de benzalkonium.

La litière telle que décrite précédemment, est destinée plus particulièrement aux animaux vivant en atmosphère confinée tels que les chevaux ou les animaux d'élevage en batterie. Toutefois, la litière selon l'invention peut être utilisée pour tous les animaux de compagnie y compris ceux dits "d'appartement" dans la mesure où elle est aisément manipulable, très absorbante et dégage une odeur agréable.

La présente invention a également pour objet le procédé de préparation de la litière selon l'invention telle que définie ci-dessus.

Ce procédé comprend les étapes consistant à :
(i) introduire des anas de lin ou de chanvre ou leurs mélanges, dans un récipient clos,
(ii) mettre en suspension les anas dans l'atmosphère du récipient, puis
(iii) atomiser la composition huileuse à partir de la partie supérieure du récipient en direction des anas et ainsi les imprégner et fixer sur ceux-ci la poussière.

Par récipient clos, on entend tout récipient permettant la mise en oeuvre de procédé de dépoussiérage, tel que décrit par les étapes (ii) et (iii). On peut utiliser en particulier un bac mélangeur de type Promill.

La mise en suspension peut être réalisée par tout moyen ayant pour effet d'agiter les anas et donc de volatiliser la poussière dans l'atmosphère dudit récipient. On peut citer en particulier l'utilisation d'air comprimé injecté à une pression d'environ 2 bars par l'intermédiaire d'une rampe munie de buses située au niveau de la partie inférieure du bac mélangeur.

La composition huileuse telle que définie selon l'invention est préparée par mélange de ses différents constituants, préalablement à son atomisation sur les anas.

L'atomisation de la composition huileuse peut être réalisée notamment par l'intermédiaire d'une rampe également munie de buses, située sur la partie supérieure du récipient clos.

Selon un mode de réalisation préféré du procédé selon l'invention, celui-ci comprend préalablement à l'étape (i), une étape de nettoyage des anas consistant à éliminer une partie de la poussière présente sur lesdits anas.

Ce nettoyage peut être notamment effectué à l'aide d'un appareil à tambour à doubles pales hélicoïdales de type "Duvex" commercialisé par la Société Charles et Vandoummèle.

L'élimination d'une partie de la poussière ainsi obtenue est généralement accompagnée de l'élimination de cailloux et autres déchets éventuellement présents sur les anas.

De préférence, cette étape de nettoyage est conduite jusqu'à l'obtention d'un taux de poussière résiduelle, mesuré selon la norme AFNOR NF V03904, inférieur ou égal à 5 % en poids de poussière par rapport au poids des anas, et en particulier inférieur ou égal à 3 %.

Selon un mode de réalisation préféré du procédé selon l'invention, on calibre en outre les anas préalablement à leur introduction dans le récipient clos.

On sélectionne ainsi de préférence les anas ayant une longueur moyenne comprise entre 2 et 30 mm environ. Cette opération peut être notamment réalisée à l'aide d'un tamiseur à nutation de type "Gan".

Comme ceci a été précisé précédemment, la litière peut contenir de plus un mélange de bactéries. L'ensemencement qui est généralement de 2 ‰ à 5 ‰ en poids par rapport au poids de la litière, est de préférence effectué après l'étape d'atomisation de la composition d'huileuse.

Lorsque la litière selon l'invention contient en outre un agent antifongique, celui-ci est également additionné de préférence après l'étape d'atomisation en une proportion comprise entre 0,5 ‰ et 2 ‰ en poids par rapport au poids total de la litière.

On va maintenant donner à titre d'illustration un exemple de réalisation de la litière selon l'invention.

### EXEMPLE

On introduit 100 kg d'anas de lin brut, de taille moyenne comprise entre 2 et 40 mm, dans un appareil à tambour à doubles pales hélicoïdales de type "Duvex" commercialisé par la Société Charles et Vandoummèle.

On récupère les anas, puis mesure leur taux de poussière résiduelle selon le protocole décrit dans la norme AFNOR NF V03904. Si celui-ci est supérieur à 5 % en poids de poussière par rapport au poids d'anas, on poursuit le nettoyage des anas en répétant l'opération décrite précédemment.

Les anas, dont le taux de poussière résiduelle est inférieur ou égal à 5 % en poids par rapport au poids des anas, sont ensuite introduits dans un crible circulaire oscillant, présentant une succession de grilles de mailles de 1,6 mm puis de 0,6 mm. On récupère alors 80 kg d'anas de lin ayant une taille moyenne comprise entre 2 et 15 mm.

Dans un bac mélangeur de type "Promill" comportant d'une part une rampe munie de buses située au niveau de sa partie inférieure et, d'autre part, une rampe également munie de buses située sur sa partie supérieure, on introduit 100 kg d'anas de lin tels qu'obtenus ci-dessus. On injecte alors de l'air comprimé à une pression d'environ 2 bars par l'intermédiaire de la rampe située au niveau de la partie inférieure du bac. Puis par l'intermédiaire de la rampe située sur la partie supérieure du bac, on atomise 2,5 kg d'une composition huileuse obtenue par mélange préalable des ingrédients suivants:
- - huile de colza: 2,25 kg
- - thymol: 0,075 kg
- - menthol: 0,0625 kg
- - eucalyptol: 0,0625 kg
- - camphre: 0,025 kg
- - huile de noix de muscade: 0,0125 kg
- - huile de feuilles de chêne: 0,0125 kg

On récupère alors les anas de lin imprégnés par soutirage.

Les anas imprégnés obtenus constituent une litière biodégradable, très absorbante, et aisément manipulable. Elle ne libère pas de poussière dans son environnement, possède un effet très bénéfique sur le système respiratoire de l'animal et présente en outre une odeur très agréable.

## Revendications

1. Litière biodégradable pour animaux, caractérisée par le fait qu'elle est constituée d'anas de lin ou de chanvre ou de leurs mélanges imprégnés par 2 à 6 % en poids d'une composition huileuse d'hygiène et fixatrice, ladite composition huileuse contenant de l'huile de colza ou de tournesol ou leurs mélanges et au moins un agent antiseptique.

2. Litière selon la revendication 1, caractérisée par le fait que lesdits anas sont des anas de lin.

3. Litière selon l'une quelconque des revendications précédentes, caractérisée par le fait que lesdits anas ont une taille comprise entre 2 et 30 mm environ.

4. Litière selon l'une quelconque des revendications précédentes, caractérisée par le fait que lesdits anas sont imprégnés par une quantité inférieure ou égale à 4 % en poids de ladite composition huileuse.

5. Litière selon l'une quelconque des revendications précédentes, caractérisée par le fait que la composition huileuse contient de 80 à 99,9 % en poids d'huile telle que définie dans la revendication 1.

6. Litière selon l'une quelconque des revendications précédentes caractérisée par le fait que ledit agent antiseptique est choisi parmi les dérivés d'alkyl phénols, de terpènes cycliques monooxygénés et leurs mélanges.

7. Litière selon la revendication 6, caractérisée par le fait que le dérivé d'alkyl phénol est le thymol.

8. Litière selon la revendication 6, caractérisée par le fait que le dérivé de terpène cyclique monooxygéné est choisi parmi le menthol et l'eucalyptol.

9. Litière selon l'une quelconque des revendications précédentes, caractérisée par le fait que ladite composition huileuse contient en outre au moins un additif choisi parmi le camphre, l'huile de noix de muscade et l'huile de feuilles de chêne.

10. Litière selon l'une quelconque des revendications précédentes, caractérisée par le fait qu'elle contient en outre un mélange de bactéries.

11. Procédé de préparation de la litière biodégradable selon l'une quelconque des revendications précédentes, caractérisé par le fait qu'il comprend les étapes consistant à :
(i) introduire des anas de lin ou de chanvre ou leurs mélanges, dans un récipient clos,
(ii) mettre en suspension les anas dans l'atmosphère dudit récipient, et
(iii) atomiser la composition huileuse à partir de la partie supérieure dudit récipient en direction desdits anas et ainsi les imprégner et fixer sur ceux-ci la poussière.

12. Procédé de préparation selon la revendication 11, caractérisé par le fait qu'il comprend préalablement à l'étape (i), une étape de nettoyage consistant à éliminer une partie de la poussière présente sur les anas.

13. Procédé de préparation selon la revendication 12, caractérisé par le fait que ladite étape de nettoyage est conduite jusqu'à l'obtention d'un taux de poussière résiduelle, mesuré selon la norme AFNOR NF V03904, inférieur ou égal à 5 % en poids par rapport au poids desdits anas.

14. Procédé selon la revendication 13, caractérisé par le fait que ledit taux de poussière résiduelle est inférieur ou égal à 3 % en poids par rapport au poids desdits anas.

15. Procédé selon l'une quelconque des revendications 11 à 14, caractérisé par le fait qu'il comprend préalablement à l'étape (i), une étape consistant à calibrer les anas, afin d'obtenir des anas dont la longueur moyenne est comprise entre 2 et 30 mm environ.

16. Procédé de préparation selon l'une quelconque des revendications 11 et 15, caractérisé par le fait qu'il comprend après l'étape (iii) d'atomisation, l'ensemencement de ladite litière par un mélange de bactéries en une proportion comprise entre 2 ‰ et 5 ‰ en poids de matière sèche par rapport au poids total de ladite litière.

## Claims

1. Biodegradable animal litter, characterized in that it consists of a bed of flax or hemp or mixtures thereof impregnated with 2 to 6% by weight of an oily fixing hygiene composition, the said oily composition containing rapeseed oil or sunflower oil or mixtures thereof and at least one antiseptic agent.

2. Litter according to Claim 1, characterized in that the said beds are beds of flax.

3. Litter according to either of the preceding claims, characterized in that the said beds are approximately between 2 and 30 mm in size.

4. Litter according to any one of the preceding claims, characterized in that the said beds are impregnated with an amount less than or equal to 4% by weight of the said oily composition.

5. Litter according to any one of the preceding claims, characterized in that the oily composition contains from 80 to 99.9% by weight of oil as defined in Claim 1.

6. Litter according to any one of the preceding claims, characterized in that the said antiseptic agent is chosen from alkylphenol derivatives and monooxygenated cyclic terpene derivatives, and mixtures thereof.

7. Litter according to Claim 6, characterized in that the alkylphenol derivative is thymol.

8. Litter according to Claim 6, characterized in that the monooxygenated cyclic terpene derivative is chosen from menthol and eucalyptol.

9. Litter according to any one of the preceding claims, characterized in that the said oily composition also contains at least one additive chosen from camphor, nutmeg oil and oak leaf oil.

10. Litter according to any one of the preceding claims, characterized in that it also contains a mixture of bacteria.

11. Process for preparing the biodegradable litter according to any one of the preceding claims, characterized in that it comprises steps consisting in:
(i) introducing beds of flax or hemp or mixtures thereof into a closed container,
(ii) suspending the beds in the atmosphere of the said container, and
(iii) spraying the oily composition from the top part of the said container in the direction of the said beds and thus impregnating them and binding the dust to them.

12. Preparation process according to Claim 11, characterized in that it comprises, prior to step (i), a cleaning step consisting in removing some of the dust present on the beds.

13. Preparation process according to Claim 12, characterized in that the said cleaning step is carried out until a level of residual dust, measured according to AFNOR standard NF V03904, of less than or equal to 5% by weight relative to the weight of the said beds is obtained.

14. Process according to Claim 13, characterized in that the said level of residual dust is less than or equal to 3% by weight relative to the weight of the said beds.

15. Process according to any one of Claims 11 to 14, characterized in that it comprises, prior to step (i), a step consisting in calibrating the beds, in order to obtain beds whose average length is approximately between 2 and 30 mm.

16. Preparation process according to either of Claims 11 and 15, characterized in that it comprises, after the spraying step (iii), inoculating the said litter with a mixture of bacteria in a proportion of between 2‰ and 5‰ by weight of solids relative to the total weight of the said litter.

## Patentansprüche

1. Biologisch abbaubare Tierstreu, dadurch gekennzeichnet daß sie zusammengesetzt ist aus Fasermaterial von Flachs oder Hanf oder deren Mischungen, imprägniert mit 2 bis 6 Gew.-% einer öligen Zusammensetzung zur Gesundheitspflege und Fixierung, wobei diese ölige Zusammensetzung Rapsöl oder Sonnenblumenöl oder deren Gemische und mindestens ein Antiseptikum enthält.

2. Tietstreu nach Anspruch 1, dadurch gekennzeichnet, daß das Fasermaterial aus Flachsfasern ist.

3. Tierstreu nach einem der vorstehenden Ansprüche, dadurch gekennzeichnet, daß das Fasermaterial eine Größe zwischen ungefähr 2 und 30 mm aufweist.

4. Tierstreu nach einem der vorstehenden Ansprüche, dadurch gekennzeichnet, daß das Fasermaterial mit einer Menge von weniger oder 4 Gew.-% der genannten öligen Zusammensetzung imprägniert ist.

5. Tierstreu nach einem der vorstehenden Ansprüche, dadurch gekennzeichnet, daß die ölige Zusammensetzung 80 bis 99,9 Gew.-% Öl gemäß Definition nach Anspruch 1 enthält.

6. Tierstreu nach einem der vorstehenden Anspruche, dadurch gekennzeichnet, daß das Antiseptikum aus Derivaten voll Alkylphenolen, von monooxygenierten cyclischen Terpenen und ihren Gemischen ausgewählt ist.

7. Tierstreu nach Anspruch 6, dadurch gekennzeichnet, daß das Alkylphenol-Derivat Thymol ist.

8. Tierstreu nach Anspruch 6, dadurch gekennzeichnet, daß das monooxygenierte cyclische Terpen aus Menthol und Eukalyptol ausgewählt ist.

9. Tierstreu nach einem der vorstehenden Ansprüche, dadurch gekennzeichnet, daß die ölige Zusammensetzung zusätzlich noch mindestens ein Additiv enthält, das aus Kampfer, Muskatnußöl und Öl aus Eichenblättern ausgewählt ist.

10. Tierstreu nach einem der vorstehenden Ansprüche, dadurch gekennzeichnet, daß es zusätzlich noch ein Gemisch aus Bakterien enthält.

11. Verfahren zur Herstellung von bioabbaubarem Tierstreu nach einem der vorstehenden Ansprüche, dadurch gekennzeichnet, daß man
(i) Fasermaterial aus Flachs oder Hanf oder ihren Gemischen in ein verschlossenes Behältnis einbringt,
(ii) das Fasermaterial in der Atmosphäre des Behältnisses in Suspension bringt,
(iii) die ölige Zusammensetzung ausgehend vom oberen Teil des Gefäßes in Richtung des Fasermaterials zerstäubt und auf diese Weise das Fasermaterial imprägniert und darauf den Staub fixiert.

12. Herstellungsverfahren nach Anspruch 11, dadurch gekennzeichnet, daß es vor dem Schritt (i) zur Entfernung des auf dem Fasermaterial befindlichen Staubes einen Reinigungsschritt aufweist.

13. Herstellungsverfahren nach Anspruch 12, dadurch gekennzeichnet, daß der Reinigungsschritt bis zum Erhalt einer verbleibenden Restmenge an Staub von Fasermaterial unterhalb oder gleich 5 Gew.-%, bezogen auf das Gewicht des genannten Fasematerials, gemessen nach der Norm AFNOR NF V03904, durchgeführt wird.

14. Verfahren nach Anspruch 13, dadurch gekennzeichnet, daß die verbleibende Restmenge an Staub weniger als oder gleich 3 Gew.-% in Bezug auf das Gewicht des Fasermaterials beträgt.

15. Verfahren nach einem der Ansprüche 1 bis 14, daß es vor dem Schritt (i) zur Kalibrierung des Fasermaterials einen Verfahrensschritt zum Erhalt eines Materials aufweist, dessen mittlere Länge etwa zwischen 20 und 30 mm beträgt.

16. Herstellungsverfahren nach einem der Ansprüche 11 und 15, dadurch gekennzeichnet, daß es nach dem Zerstäubungschritt (iii) das Beimpfen des genannten Streus durch ein Bakteriengemisch im Mengenverhältnis zwischen 2 Trockengew.-‰ und 5 Trockengew.-‰ in Bezug auf das Gesamtgewicht des genannten Streus miteinschließt.
